# EUROPEAN PATENT APPLICATION

(11) **EP 2 679 808 A1**
(43) Date of publication of application: **01.01.2014**
(21) Application number: 12174097.1
(22) Date of filing: 28.06.2012
(51) Int. Cl.: F03D 7/02, F03D 11/00

(54) **Stall detection of wind turbine blades**

(71) Applicant: Siemens Aktiengesellschaft, 80333 München (DE)
(72) Inventor: Esbensen, Thomas, 7400 Herning (DK); Hoegh, Gustav, 7400 Herning (DK)

(57) **Abstract**

The invention provides a stall sensor for a wind turbine, a wind turbine comprising such a stall sensor and a method of operating such a wind turbine. The stall sensor comprises detector means (10) adapted to measure vibration of a rotor blade of the wind turbine and to output a vibration signal representative of the vibration of the rotor blade, conversion means (11) connected to the detector means (10) and adapted to determine a noise figure representative of a spectral signal content within a frequency band of the vibration signal received from the detector means (10) and arbiter means (12) connected to the conversion means (11) and adapted to signal a presence or an absence of stall based on the noise figure received from the conversion means (11).

## Description

### Technical Field

The invention refers to a stall sensor for a wind turbine, a wind turbine comprising such a stall sensor and a method of operating such a wind turbine.

### Technical Background

Wind turbines are controlled to maximise power output, to decrease loads and wear of the wind turbine and to reduce acoustic noise emission. The controller of the wind turbine is designed to provide a good performance for certain environmental conditions. When a control strategy is determined, the aerodynamic capabilities are pushed to their limits in the power optimisation region to maximise the performance of the wind turbine. However, if the aerodynamic settings are too aggressive, e.g. because of model inaccuracies in the model used to derive the settings, change in environmental conditions, etc., the blades of the wind turbine may stall and suddenly the power output will drop and loads and noise will increase dramatically.

The lift force of a wind turbine blade increases as the blade is turned (pitched) to present itself at a large angle to the wind. The resultant angle is called the angle of attack. At large angles of attack the blade stalls and the lift decreases again. Thus, there is an optimum angle of attack to generate the maximum lift.

In order to achieve the maximum possible power production, it is important that the angle of attack is set right. If it is too low, the power production will be low. However, if it is too large, the rotor blade or parts of the rotor blade will stall and the power production will drop or the blade will be too noisy. For this reason the control laws of a wind turbine are commonly made such that the performance will be maximised for certain assumptions regarding stall margin of the rotor, environmental conditions, etc. This causes two problems: the control laws may be too conservative for many situations unnecessarily decreasing the power output of the wind turbine. On the other hand, the assumptions on which the control laws are based may prove wrong for some situations or due to changing environmental conditions causing stall and thus increased wear and tear, reduced power output and high noise emissions.

### Summary of the Invention

To overcome the aforementioned problems a first aspect of the invention provides a stall sensor for a wind turbine. The stall sensor comprises detector means adapted to measure vibration of a rotor blade of the wind turbine and to output a vibration signal representative of the vibration of the rotor blade, conversion means connected to the detector means and adapted to determine a noise figure representative of a spectral signal content within a frequency band of the vibration signal received from the detector means and arbiter means connected to the conversion means and adapted to signal a presence or an absence of stall based on the noise figure received from the conversion means.

The stall sensor of the invention provides a simple and reliable way of detecting stall. Detecting stall allows a controller to set the aerodynamics of a wind turbine to optimum settings for any given situation thus maximising power output of the wind turbine where previously stall margins were set too pessimistically. Furthermore, the control laws of the wind turbine can be successively modified to optimize settings during operation of the wind turbine and in response to detection of stall making the occurrence of stall more unlikely while improving the overall power production. The modified settings can be used for control of other wind turbines of the same or similar make. By avoiding or reducing stall, noise emission can be reduced drastically and lifetime of the wind turbine can be extended.

The detector means may comprise at least one of a displacement sensor adapted to measure a location of the rotor blade relative to a plane of rotation of the rotor blade, an acoustic sensor adapted to measure a sound pressure or an acceleration sensor adapted to measure a movement of the rotor blade relative to the plane of rotation of the rotor blade. For example, the detector means may be or include accelerometers, microphones, strain gauges, optical sensors, piezzo-electric sensors, or other types of sensors that can measure vibrations of the rotor blade or any structural part of the wind turbine connected to the rotor blade. Accordingly, the vibration signal may be a vibration, acceleration, or sound pressure signal.

The conversion means may comprise at least one of a processor adapted to determine a spectrum of the vibration signal and/or a signal value at one or more discrete frequencies of the spectrum of the vibration signal and one or more bandpass peak programme meters adapted to determine a transient signal level of the vibration signal within the frequency band or within a respective part of the frequency band. The processor may use a Fourier transform or a related transform for determining the spectrum of the vibration signal. The invention is based on the understanding that stall causes certain characteristics in the noise emanating from the rotor blades. For example, a signal level will be higher at certain frequencies. For this reason, the frequency band may range from frequencies of approximately 60 Hz to about 2 kHz, more preferably from 120 Hz to 1 kHz. In some embodiments the signal level within the whole frequency band may be evaluated for determination of the noise figure, in others only one or several discrete frequencies from the frequency band may be considered.

The arbiter means may be adapted to compare the noise figure to a threshold noise figure and to signal the presence of stall if the noise figure exceeds the threshold noise figure and to signal the absence of stall else. The threshold noise figure may be a preset value, a function of environmental parameters, or a typical noise figure such as a noise figure that has been determined many times for the same or similar environmental conditions, especially for the same wind speed.

The arbiter means may also be adapted to determine a variance of the noise figure, to compare the variance of the noise figure to a threshold variance and to signal the presence of stall if the variance exceeds the threshold variance and to signal the absence of stall else. This embodiment of the invention accounts for the rapid changes in noise amplitude that may often be found when stall occurs at a rotating rotor blade. When no stall is present at the rotor blade, variation of noise amplitude will be much slower and less pronounced.

The arbiter means may also be adapted to compare a first value of the noise figure determined for a first rotor position to a second value of the noise figure determined for a second rotor position and to signal the presence of stall if the second value exceeds the first value by a predetermined noise margin or by a predetermined factor and to signal the absence of stall else. For example, the rotor blade may point away from ground level in the second rotor position and point towards ground level in the first rotor position. The angle of attack increases with wind speed. Often the wind speeds increase at greater heights (this is called positive wind shear), and then the occurrence of stall is most likely when the rotor blade points upwards. Thus, if the noise figure is notably higher when the rotor blades points upwards than when it points downwards, the presence of stall may be assumed. By considering the current orientation of the rotor blade in such a way the reliability and sensitivity of stall detection may be greatly enhanced.

A second aspect of the invention provides a wind turbine comprising at least one stall sensor according to the first inventive aspect and a rotor having a plurality of rotor blades.

A third aspect of the invention provides a method of operating the wind turbine of the invention. The method comprises steps of:
- sensing the presence or absence of stall; and
- changing at least one operational parameter of the wind turbine in accordance with a result of the sensing.

The presence of stall may be sensed when the at least one stall sensor signals the presence of stall during a first predetermined duration, when the at least one stall sensor signals the presence of stall more than a first predetermined number of times during a second predetermined duration, when the at least one stall sensor signals the presence of stall more than a second predetermined number of times during a predetermined number of rotor revolutions, or when the at least one stall sensor signals the presence of stall for more than one rotor blade of the wind turbine. These embodiments of the inventive method have an advantage of an improved reliability of stall detection and enhanced stability of operation of the wind turbine because the at least one operational parameter of the wind turbine is not changed immediately after the stall sensor has signalled the presence of stall once. Careful selection of the first predetermined duration, the first predetermined number of times, the second predetermined duration, the second predetermined number of times and/or the predetermined number of rotor revolutions allows for setting a suitable sensitivity of the stall sensor. E.g. if a turbine is located near to residential areas and thus running under very strict noise requirements, the stall sensor may be more sensitive which can be achieved by setting the aforementioned parameters to relatively lower (first and second predetermined number of times, first predetermined duration) or higher values (second predetermined duration, predetermined number of rotor revolutions).

Changing the at least one operational parameter of the wind turbine may include changing at least one of a pitch angle of one or all rotor blades, changing a power or torque reference of an electric generator or converter of the wind turbine, yawing the wind turbine or changing the rotor speed of the rotor of the wind turbine. For example, if stall is detected, the collective or individual pitch angle of the rotor blades may be increased or the rotor speed may be increased because this will reduce the angle of attack. The pitch angle may be increased with a fixed step size until stall is no longer detected. Furthermore, the power or torque reference may be lowered which indirectly affects the angle of attack. Yawing the wind turbine may lead to a change of direction of wind relative to the rotor of the wind turbine.

### Short Description of the Figures

These and other features, aspects and advantages of the invention will become better understood with reference to the following description and accompanying drawings in which:
Fig. 1 shows a an exemplary airfoil of a rotor blade of a wind turbine;
Fig. 2 shows a block diagram of the stall sensor of the invention; and
Fig. 3 is a diagram showing sound pressure p as a function of frequency f.

### Detailed Description of the Figures

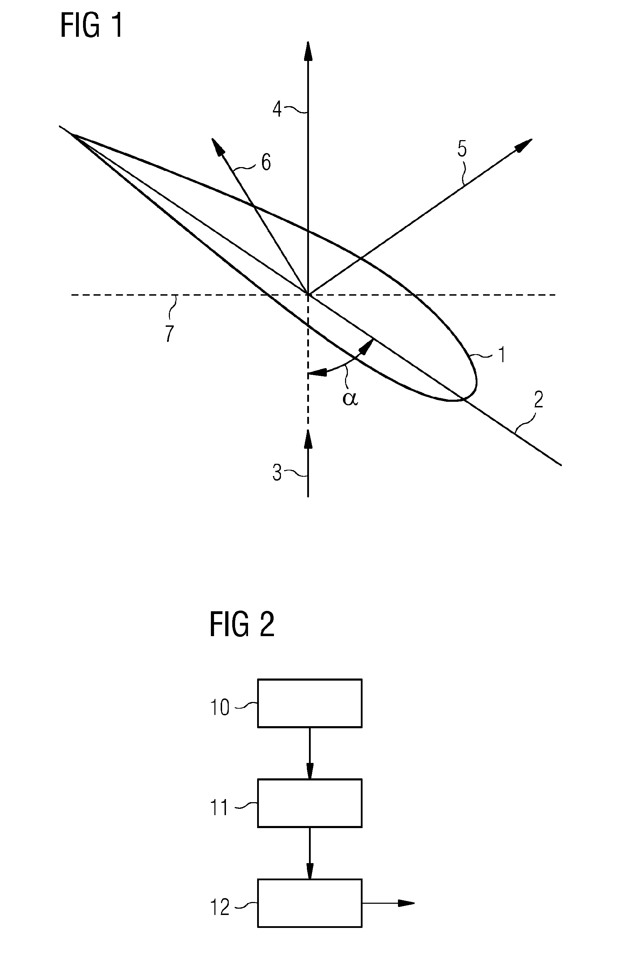

Figure 1 shows an exemplary airfoil 1 of a rotor blade of a wind turbine. The angle of attack α is measured between a chord line 2 of the airfoil 1 and a direction of wind 3. Equivalently a pitch angle measured between the chord line 2 and a plane of rotation 7 may be used for describing the orientation of the rotor blade 1. The chord line 2 intersects a leading edge and a trailing edge of the airfoil 1. The wind 3 acting on the airfoil 1 causes the rotor blade to move along the plane of rotation 7. When the rotor blade rotates due to the rotor effective wind speed, the rotor blade experiences an additional wind speed component opposite to the direction of rotation. Hence, the blade experiences a resulting wind speed which is the direction of wind as seen by the rotating rotor blade.

Due to the profile of the rotor blade, a pressure drop is generated on the upper surface of the rotor blade which results in a lift force 5 perpendicular to the resulting wind speed. In addition to the lift force, the resulting wind speed also generates a drag force 6. The sum of lift force 5 and drag force 6 in the direction of the plane of rotation results in an aerodynamic torque acting on the rotor. In the same way, their components in the direction of the rotor axis result in an aerodynamic thrust 4 acting on the rotor of the wind turbine.

Figure 2 shows a block diagram of the stall sensor of the invention. The stall sensor comprises detector means 10 having an output connected to conversion means 11. The detector means 10 are adapted to measure a vibration of a rotor blade of the wind turbine and to output a vibration signal representative of the vibration of the rotor blade to the conversion means 11. The conversion means 11 are adapted to determine a noise figure representative of a spectral signal content within a frequency band of the vibration signal received from the detector means 10. An output of the conversion means 11 is connected to arbiter means 12. The arbiter means 12 are adapted to signal a presence or an absence of stall based on the noise figure received from the conversion means 11.

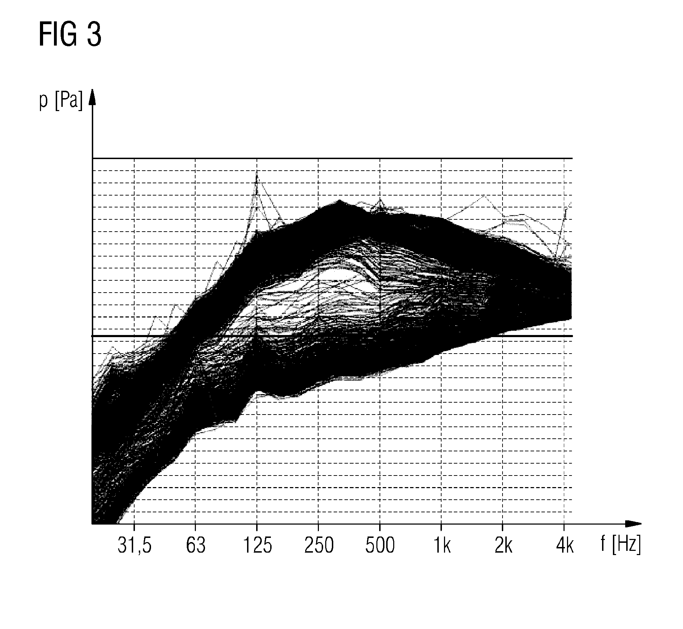

Figure 3 is a diagram showing sound pressure p as a function of frequency f. For the diagram a plurality of measurements were carried out for numerous settings of the rotor blade and varying environmental conditions. As can be clearly seen from the figure, two distinct noise levels can be identified in a frequency band ranging from frequencies of approximately 60 Hz to about 2 kHz with the clearest distinction in a frequency band from about 120 Hz to about 1 kHz. The upper noise levels can be associated with the presence of stall while the lower noise levels mean the absence of noise. Accordingly, the arbiter means of the stall sensor can clearly distinguish between the presence or absence of stall by referring to values of sound pressures in the aforementioned frequency bands. In this way the invention provides a simple means of detecting stall.

While the invention has been described by referring to preferred embodiments and illustrations thereof, it is to be understood that the invention is not limited to the specific form of the embodiments shown and described herein, and that many changes and modifications may be made thereto within the scope of the appended claims by one of ordinary skill in the art.

## Claims

1. A stall sensor for a wind turbine, the stall sensor comprising detector means (10) adapted to measure vibration of a rotor blade of the wind turbine and to output a vibration signal representative of the vibration of the rotor blade, conversion means (11) connected to the detector means (10) and adapted to determine a noise figure representative of a spectral signal content within a frequency band of the vibration signal received from the detector means (10) and arbiter means (12) connected to the conversion means (11) and adapted to signal a presence or an absence of stall based on the noise figure received from the conversion means (11).

2. The stall sensor of the preceding claim, wherein the detector means (10) comprise at least one of a displacement sensor adapted to measure a location of the rotor blade relative to a plane of rotation of the rotor blade, an acoustic sensor adapted to measure a sound pressure or an acceleration sensor adapted to measure a movement of the rotor blade relative to the plane of rotation of the rotor blade.

3. The stall sensor of one of the preceding claims, wherein the conversion means (11) comprise at least one of a processor adapted to determine a spectrum of the vibration signal and/or a signal value at one or more discrete frequencies of the spectrum of the vibration signal or one or more bandpass peak programme meters adapted to determine a transient signal level of the vibration signal within the frequency band or within a respective part of the frequency band.

4. The stall sensor of one of the preceding claims, wherein the arbiter means (12) are adapted to compare the noise figure to a threshold noise figure and to signal the presence of stall if the noise figure exceeds the threshold noise figure and to signal the absence of stall else.

5. The stall sensor of one of the preceding claims, wherein the arbiter means (12) are adapted to determine a variance of the noise figure, to compare the variance of the noise figure to a threshold variance and to signal the presence of stall if the variance exceeds the threshold variance and to signal the absence of stall else.

6. The stall sensor of one of the preceding claims, wherein the arbiter means (12) are adapted to compare a first value of the noise figure determined for a first rotor position to a second value of the noise figure determined for a second rotor position and to signal the presence of stall if the second value exceeds the first value by a predetermined noise margin or by a predetermined factor and to signal the absence of stall else.

7. A wind turbine comprising at least one stall sensor according to one of the preceding claims and a rotor having a plurality of rotor blades.

8. A method of operating the wind turbine of the preceding claim, comprising steps of:
- sensing the presence or absence of stall; and
- changing at least one operational parameter of the wind turbine in accordance with a result of the sensing.

9. The method of the preceding claim, wherein the presence of stall is sensed when the at least one stall sensor signals the presence of stall during a first predetermined duration, when the at least one stall sensor signals the presence of stall more than a first predetermined number of times during a second predetermined duration, when the at least one stall sensor signals the presence of stall more than a second predetermined number of times during a predetermined number of rotor revolutions or when the at least one stall sensor signals the presence of stall for more than one rotor blade of the wind turbine.

10. The method of one of the claims 8 or 9, wherein changing the at least one operational parameter of the wind turbine includes changing at least one of a pitch angle of one or all rotor blades, changing a power or torque reference of an electric generator or a converter of the wind turbine, yawing the wind turbine or changing the rotor speed of the rotor of the wind turbine.
